(19) Europäisches Patentamt
European Patent Office
Office européen des brevets

(11) **EP 3 349 108 B1**

(12) **EUROPEAN PATENT SPECIFICATION**

(45) Date of publication and mention
of the grant of the patent:
**29.12.2021 Bulletin 2021/52**

(51) Int Cl.:
*G06F 3/0488* (2013.01)    *G06F 16/903* (2019.01)

(21) Application number: **17196786.2**

(22) Date of filing: **17.10.2017**

(54) **CHARACTER STRING INPUT APPARATUS, INPUT CHARACTER STRING INFERENCE METHOD, AND INPUT CHARACTER STRING PRESUMPTION PROGRAM**

ZEICHENFOLGEEINGABEVORRICHTUNG, EINGABEZEICHENFOLGEINFERENZVERFAHREN UND ZEICHENFOLGEPRÄSUMTIONSPROGRAMM

APPAREIL D'ENTRÉE DE CHAÎNE DE CARACTÈRES, MÉTHODE D'INFÉRENCE DE CHAÎNE DE CARACTÈRES D'ENTRÉE ET PROGRAMME DE PRÉSOMPTION DE CHAÎNE DE CARACTÈRES D'ENTRÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2017 JP 2017004305**

(43) Date of publication of application:
**18.07.2018 Bulletin 2018/29**

(73) Proprietor: **Omron Corporation**
**Kyoto-shi, Kyoto 600-8530 (JP)**

(72) Inventors:
• **Sasano, Yasumasa**
**Kyoto-shi, Kyoto 604-8152 (JP)**
• **Ukai, Kenichi**
**Kyoto-shi, Kyoto 604-8152 (JP)**
• **Nakayama, Takuya**
**Kyoto-shi, Kyoto 604-8152 (JP)**

(74) Representative: **Kilian Kilian & Partner**
**Aidenbachstraße 54**
**81379 München (DE)**

(56) References cited:
**US-A1- 2007 040 813    US-A1- 2013 249 818**
**US-A1- 2013 290 894    US-A1- 2014 359 515**

EP 3 349 108 B1

**Description**

FIELD

The present invention relates to a technique for inputting a character string by an operator performing an operation by sliding his or her finger, a pen or the like on a screen.

BACKGROUND

Conventionally, there are character string input apparatuses that display a keypad image in which a plurality of character keys are arranged on a screen of a display device, and allow an operator to perform an operation by sliding his or her finger, a pen or the like on the screen (for example, see US 8667414B2). This character string input is commonly called gesture input.

As shown in US 8667414B2, in the character string input apparatus, a touch panel is attached to the screen of the display device. An operator performs an operation by sliding his or her finger, a pen or the like on the screen of the display device so as to press character keys of a character string to be input, from the first character in order, on the keypad image displayed on the screen of the display device. The character string input apparatus obtains the locus of a line on the screen of the display device along which the operator slid his or her finger, a pen or the like, by repeatedly detecting the pressed positions on the screen of the display device in a predetermined sampling period. The character string input apparatus determines whether a sliding operation was performed on a character key by the user in order to input a character string, or the sliding operation was performed on the character key since the character key was positioned midway on the movement path from one character key to another character key (the sliding operation was not performed on the character key in order to input a character string), according to change in the moving direction and the moving speed on the obtained locus, and infers the character string input by the user.

US 8667414B2 is an example of background art. Further prior art documents are US 2014/359515 A1, US 2013/290894, US 2013/249818 A1 and US 2007/040813 A1, wherein US 2014/359515 A1 discloses a character string input apparatus according to the preamble of claim 1.

Recently, techniques for inferring a character string input by an operator from an input operation performed by the operator sliding his or her finger, a pen or the like on a screen of a display device have been actively developed. Additionally, the load of processing for detecting change in the moving direction and the moving speed on the locus of a line along which an operator slid his or her finger, a pen or the like is large, and thus there is demand for a technique for inferring a character string that has been input, with relatively simple processing.

The object of the present invention is to provide a technique that is able to infer a character string input by an operator, with respect to an input operation in which the operator slides his or her finger, a pen or the like on a screen of a display device, with relatively simple processing. This object is achieved by the subject matter of claims 1 and 8. Further advantageous embodiments of the invention are the subject-matter of the dependent claims. Aspects of the invention are set out below.

SUMMARY

A character string input apparatus according to an aspect of the present invention and claimed in the independent claims 1, 8 and 9 is configured as follows

A display unit displays a keypad image in which a plurality of character keys are arranged, on a screen of a display device. An operation position detection unit detects pressed positions on the screen of the display device.

A score calculation unit calculates, for each of the character keys of the keypad image, scores for the pressed positions on the screen of the display device. This score calculation unit calculates, as a score, a value indicating a closeness between a display position of a character key on the screen of the display device and a pressed position on the screen of the display device, for example.

A score data generation unit generates, for each of the pressed positions on the screen of the display device detected by the operation position detection unit during a character string input period, score data in which the scores for the character keys calculated by the score calculation unit are registered. For example, the score data generation unit generates score data which is matrix data in which the character keys are associated with timings at which the pressed positions on the screen of the display device are detected by the operation position detection unit, element values of the matrix data serving as the scores calculated by the score calculation unit. This score data is matrix data, and thus can be regarded as image

An input character string inference unit infers a character string that was input, using the score data generated by the score data generation unit.

For example, reference score data is stored in a character string database in association with each character string. In this case, the input character string inference unit collates the score data generated by the score data generation unit with the reference score data stored in the character string database for each character string, and infers a character string that was input according to the similarity thereof.

In addition, a feature amount of the reference score data is stored in a character string database in association with each character string. In this case, the input character string inference unit collates a feature amount of the score data generated by the score data generation unit with the feature amount of the reference score data stored in the character string database for each character string, and infers a character string that was input according to the similarity thereof.

The input character string inference unit regards the score data generated by the score data generation unit as image data and performs processing, and thereby the character string that has been input can be inferred without detecting change in the moving direction and the moving speed on the locus of a line along which the operator slid his or her finger, a pen or the like. Accordingly, the character string input by the operator can be inferred with relatively simple processing, with respect to a character string input operation in which the operator slides his or her finger, a pen or the like on the screen of the display device.

In addition, a configuration may be adopted in which the input character string inference unit confirms that a character of a character key whose score calculated by the score calculation unit is largest is a first character of a character string to be inferred, with respect to a pressed position on the screen of the display device first detected by the operation position detection unit, during the character string input period. Usually, when starting a sliding operation on the screen of the display device in order to input a character string, the operator presses the character key corresponding to the first character of a character string to be input on the screen of the display device with his or her finger, a pen or the like. Accordingly, at the start timing of the character string input period, the operator will be pressing the character key corresponding to the first character of a character string to be input with his or her finger, a pen or the like. According to this configuration, it is sufficient that the input character string inference unit infers only whether or not a character string whose first character is the same as the confirmed character is the character string that has been input, and thus the processing load is further reduced.

Moreover, a configuration may be adopted in which the input character string inference unit confirms that a character of a character key whose score calculated by the score calculation unit is largest is a last character of a character string to be inferred, with respect to a pressed position on the screen of the display device lastly detected by the operation position detection unit, during the character string input period. Usually, when ending a sliding operation on the screen of the display device in order to input a character string, the operator lifts his or her finger, a pen or the like that is pressing the character key corresponding to the last character of the character string to be input, on the screen of the display device. Accordingly, at the end timing of the character string input period, the operator will be pressing the character key corresponding to the last character of a character string to be input, with his or her finger, a pen or the like. According to this configuration, it is sufficient that the input character string inference unit infers only whether or not a character string whose last character is the same as the confirmed character is the character string that has been input, and thus the processing load is further reduced.

According to the aspect of this invention, a character string that has been input by an operator can be inferred, with respect to an input operation in which the operator slides his or her finger, a pen or the like on the screen of a display device, with relatively simple processing.

BRIEF DESCRIPTION OF THE DRAWINGS

FIG. 1 is a block diagram showing the configuration of a main portion of a character string input apparatus of this example.
FIG. 2 is a diagram illustrating a character string input operation.
FIGS. 3A to 3C are diagrams illustrating a technique for a calculating score do of a character key.
FIGS. 4A and 4B are diagrams illustrating another technique for calculating the score do of a character key.
FIG. 5 is a diagram showing score data.
FIG. 6 is a flowchart showing character string input processing.
FIG. 7 is a flowchart showing character string inference processing.
FIG. 8 is a flowchart showing character string inference processing according to another example.

DETAILED DESCRIPTION

A character string input apparatus that is an embodiment of the present invention will be described below.

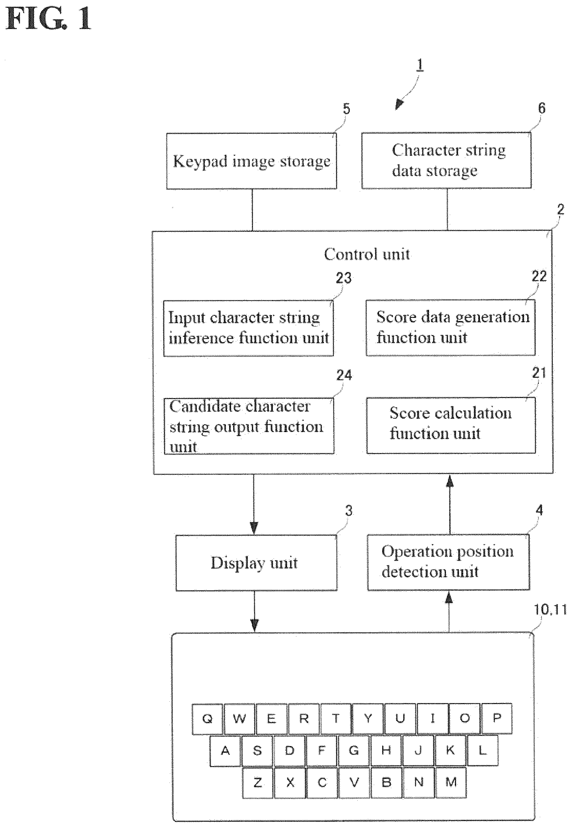

FIG. 1 is a block diagram showing the configuration of a main portion of a character string input apparatus according to this example. A character string input apparatus 1 according to this example is provided with a control unit 2, a display unit 3, an operation position detection unit 4, a keypad image storage 5, and a character string data storage 6. This character string input apparatus 1 can be configured as part of the functions of a mobile terminal such as a smartphone or a tablet terminal, or can be configured as part of the functions of an information processing apparatus such as a desktop personal computer that is installed for use on a desk.

The control unit 2 controls operations of constituent elements of the main body of this character string input apparatus 1. This control unit 2 is constituted by a hardware CPU, a memory, and other electronic circuits. The hardware CPU functions as a score calculation function unit 21, a score data generation function unit 22, an input character string inference function unit 23, and a candidate character string output function unit 24. In addition, the memory has a region for deploying a character string input program according to the present invention, a region for temporarily storing data generated when the character string input apparatus 1 main body is operated, and the like. The control unit 2 may be constituted by an LSI in which the hardware CPU, the memory and the like are integrated. The score calculation function unit 21, the score data generation function unit 22, the input character string inference function unit 23 and the candidate character string output function unit 24 of the control unit 2 will be described later in detail.

The display unit 3 displays an image (e.g., a keypad image that will be described later) instructed by the control unit 2 on the screen of a display device 10.

The operation position detection unit 4 detects positions on the screen of the display device 10 pressed with a finger, a pen or the like. In this example, the operation position detection unit 4 detects positions on the screen of the display device 10 pressed with a finger, a pen or the like using a touch panel 11 attached to the screen of the display device 10. The operation position detection unit 4 repeatedly detects pressed positions on the screen of the display device 10, in a predetermined sampling period (e.g., 10 to 50 msec).

The keypad image storage 5 stores one or more keypad images in which a plurality of character keys are arranged. The control unit 2 instructs the display unit 3 to display, on the display device 10, a currently selected keypad image that is stored in the keypad image storage 5. FIG. 1 shows an example in which a keypad image including character keys for the 26 characters of the alphabet is displayed on the screen of the display device 10.

The character string data storage 6 stores, for each character string, feature information in which reference data is associated with the character string. The character string data storage 6 stores the feature information for each keypad image stored in the keypad image storage 5. The reference data is matrix data consisting of n rows and M columns. n is the number of character keys arranged in a corresponding keypad image. M is a predetermined value. The reference data will be described later in detail.

Note that here, the reference data will be described as matrix data consisting of n rows and M columns, but may be matrix data consisting of M rows and n columns in which the columns and rows are interchanged.

In the example shown in FIG. 1, the keypad image storage 5 and the character string data storage 6 are illustrated as constituent elements different from the control unit 2, but the keypad image storage 5 and the character string data storage 6 may be constituted by the memory of the control unit 2.

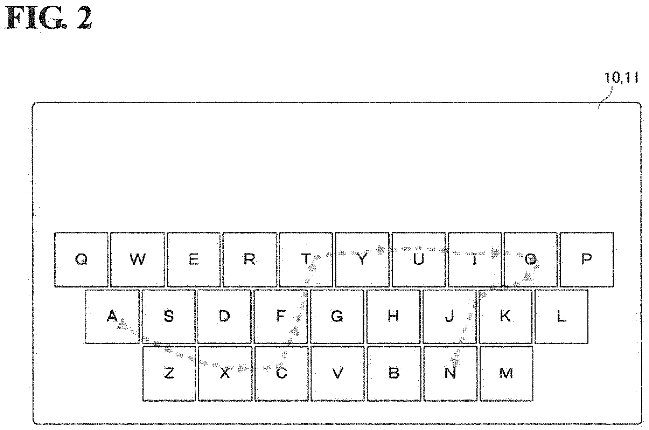

The operator inputs a character string by sliding his or her finger, a pen or the like on the keypad image displayed on the screen of the display device 10. Specifically, the operator slides his or her finger, a pen or the like on the keypad image displayed on the screen of the display device 10 so as to press character keys corresponding to characters constituting a character string to be input, from the first character in order. For example, FIG. 2 shows a locus along which an operator slid his or her finger, a pen or the like on a keypad image displayed on the screen of the display device 10 in order to input a character string consisting of six characters "action". As shown in FIG. 2, the operator pressed not only on character keys "A", "C", "T", "I", "O", and "N" for the characters of the character string "action" that is to be input, but also on character keys for other characters (e.g., "Z" and "X").

Here, the score calculation function unit 21, the score data generation function unit 22, the input character string inference function unit 23, and the candidate character string output function unit 24 of the control unit 2 will be described. This control unit 2 executes an input character string inference method according to the present invention. In addition, an input character string inference program according to the present invention is installed in the control unit 2.

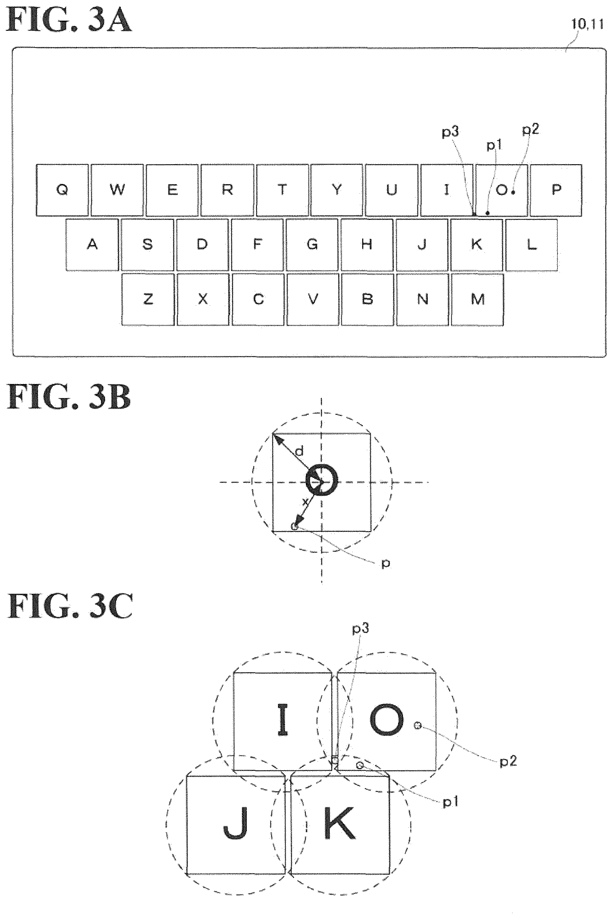

The score calculation function unit 21 calculates scores $d_0$ for pressed positions on the screen of the display device 10 pressed by the operator with his or her finger, a pen or the like, for each of the character keys of the keypad that is an image displayed on the screen of the display device 10. FIGS. 3A to 3C are diagrams illustrating a technique for calculating scores do for each of the character keys. As shown in FIG. 3A, a keypad image including a plurality of character keys is displayed on the screen of the display device 10. Positions p1, p2, and p3 shown in FIG. 3A indicate pressed positions on the screen of the display device 10 that have been pressed by the operator with his or her finger, a pen or the like, and have been detected by the operation position detection unit 4. For example, the pressed position p1 is a pressed position detected by the operation position detection unit 4 at a timing $t_i$, the pressed position p2 is a pressed position detected by the operation position detection unit 4 at a timing $t_j$, and the pressed position p3 is a pressed position detected by the operation position detection unit 4 at a timing $t_k$. The timings $t_i$, $t_j$ and $t_k$ are timings different from each other.

The score calculation function unit 21 calculates the score do of a character key for a pressed position p on the screen of the display device 10 as a value that is based on a distance x between the center of the character key and the pressed position p. In this example, as shown in FIG. 3B, the score do of a character key is calculated using:

$$d_0 = d - x$$

Note that do = 0 when d < x.

In this example, the longer the distance x is, the smaller the value of the score $d_0$ that is calculated becomes, and when the distance x exceeds a certain length (here, d), the value of the score do takes a fixed value (do = 0). In addition, in this example, the character keys are assumed to be rectangular, and the radius of the circumscribed circle of this character key is assumed to be d. A character key may be a square, or may be a rectangle.

For example, it is the two character keys "O" and "K" that take values other than 0 as the score $d_0$ for the pressed position p1 shown in FIG. 3C (the scores $d_0$ of the other character keys are 0). In addition, it is only the character key "O" that takes a value other than 0 as the score $d_0$ of the pressed position p2 shown in FIG. 3C (the scores $d_0$ of the other character keys are 0). In addition, it is the three character keys "O", "I" and "K" that take values other than 0 as the score do for the pressed position p3 shown in FIG. 3C (the scores $d_0$ of the other character keys are 0).

Note that in the above-described example, the maximum value of the score do will be d. For example, the maximum value of the score may be 255. Specifically, it is sufficient that the score do is calculated using:

$$d_0 = (255 \, / \, d) \, (d \, \text{-} \, x),$$

and

is rounded off after the decimal point (may be rounded up or rounded down). Note that, if d < x, do = 0 is assumed to hold. Accordingly, the score do can be used as a value of 256 gradations.

In addition, the expression for calculating the score $d_0$ is not limited to the above-mentioned expression, and any calculation expression may be applied as long as the longer the distance x is, the smaller or larger the value of the score do becomes. For example, an expression for calculating the score do may be: $d_0 = d^2 \text{-} x^2$. Note that if d < x, $d_0 = 0$ is assumed to hold.

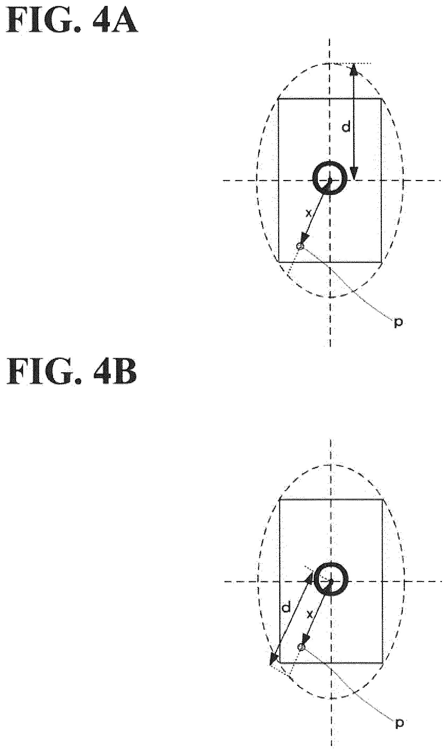

In addition, in the above-described example, d is assumed to denote the radius of the circumscribed circle of a character key, but d may take a value slightly larger than the radius of this circumscribed circle. If the character keys are square, the radius of the inscribed circle of the character key may be d. Also, if the character keys are rectangular, as shown in FIG. 4A, half (1/2) the long diameter of an ellipse circumscribing the character key may be d. In addition, as shown in FIG. 4B, the distance between the center of the character key and an intersection at which a straight line connecting the center of the character key and the pressed position p intersects an ellipse circumscribing the character key may be d. In the example shown in FIG. 4B, d is not a constant value, and changes according to the pressed position p.

The score data generation function unit 22 generates score data in which the scores of the character keys calculated by the score calculation function unit 21 are registered, for each of the pressed positions detected by the operation position detection unit 4 in a sampling period, during a character string input period. If the operation position detection unit 4 did not detect any pressed positions on the screen of the display device 10 last time, the score data generation function unit 22 determines that the timing at which the pressed positions were detected by the operation position detection unit 4 this time to be a start timing of the character string input period. In addition, if the operation position detection unit 4 detected pressed positions on the screen of the display device 10 last time, and did not detect any pressed positions on the screen of the display device 10 this time, the score data generation function unit 22 determines that the timing at which the pressed positions on the screen of the display device 10 were detected last time to be an end timing of the character string input period.

Therefore, the number m of pressed positions on the screen of the display device 10 detected by the operation position detection unit 4 during a character string input period changes according to the length of the character string input period. The number n of character keys depends on the keypad displayed on the screen of the display device 10. In this example (an example shown in FIG. 1 or 2), the number n of character keys is 26. The score calculation function unit 21 calculates m $\times$ n scores $d_0$ during the character string input period.

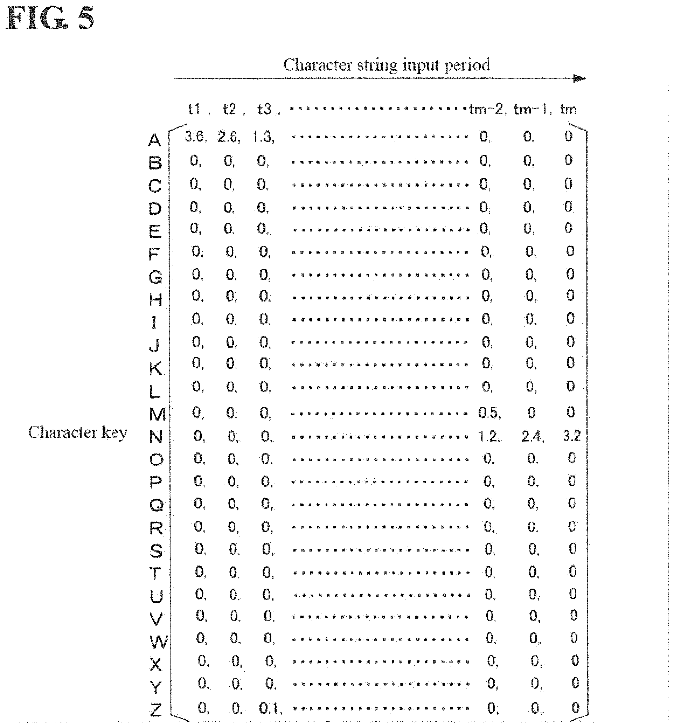

The score data generation function unit 22 generates matrix data of n rows and m columns (may generate matrix data of m rows and n columns in which the columns and rows are interchanged) (see FIG. 5) as score data. The rows in the score data shown in FIG. 5 correspond to the character keys. Also, the columns in the score data shown in FIG. 5 correspond to timings at which the operation position detection unit 4 detected pressed positions on the screen of the display device 10, and are temporally continuous in the row direction (the horizontal direction in FIG. 5). Element values are scores calculated by the score calculation function unit 21. This score data is matrix data consisting of n rows and m columns, and thus by regarding the element values as pixel values, the score data can be regarded as image data.

In addition, as described above, the number m of pressed positions on the screen of the display device 10 detected by the operation position detection unit 4 during a character string input period changes according to the length of the character string input period. The length of the character string input period changes according to the number of characters of a character string to be input, a speed at which the operator performs a sliding operation on the keypad image displayed on the screen of the display device 10, and the like. The score data generation function unit 22 performs normalization for converting matrix data consisting of n rows and m columns generated as score data into matrix data consisting of n rows and M columns that is independent of the length of the character string input period. For example, if m > M, the score data generation function unit 22 reduces the number of columns in the generated matrix data consisting of n rows and m columns, by linear interpolation or the like, and converts the matrix data consisting of n rows and m columns into matrix data consisting of n rows and M columns. If m < M, the score data generation function unit 22 adds the number of columns in the generated matrix data consisting of n rows and m columns, by linear interpolation or the like, and converts the matrix data consisting of n rows and m columns into matrix data consisting of n rows and M columns. In the following description, the normalized matrix data consisting of n rows and M columns may also be referred to normalized score data.

Note that if m = M, the score data generation function unit 22 converts the generated score data into normalized score data.

The input character string inference function unit 23 regards score data normalized by the score data generation function unit 22 as image data, and infers the character string by known image matching technique. As described above, the character string data storage 6 stores feature information in which character strings are associated with reference data, for each of the character strings. The reference data is matrix data consisting of n rows and M columns. Specifically, the reference data is data generated by repeatedly inputting a corresponding character string and statistically processing normalized score data generated every time the character string was input. As described above, the character string data storage 6 stores feature information for each keypad image stored in the keypad image storage 5. The reference data is equivalent to reference score data in the present invention.

The input character string inference function unit 23 infers that character strings corresponding to reference data whose similarity with normalized score data exceeds a predetermined threshold value are candidates for a character string that has been input.

The candidate character string output function unit 24 instructs the display unit 3 to display, on the display device 10, the candidates for the character string inferred by the input character string inference function unit 23. In accordance with this instruction, the display unit 3 displays the candidates for the character string inferred by the input character string inference function unit 23, on the screen of the display device 10. At this time, the candidates for the character string may be displayed on the display device 10, from a character string corresponding to reference data whose similarity with normalized score data is highest in order, or may be displayed on the display device 10 in alphabetical order, Japanese alphabetical order or the like.

When the operator selects one candidate, the control unit 2 determines that the selected character string is the character string that has been input. The operator selects a candidate character string by pressing the screen of the display device 10 at a position at which the candidate character string to be selected is displayed.

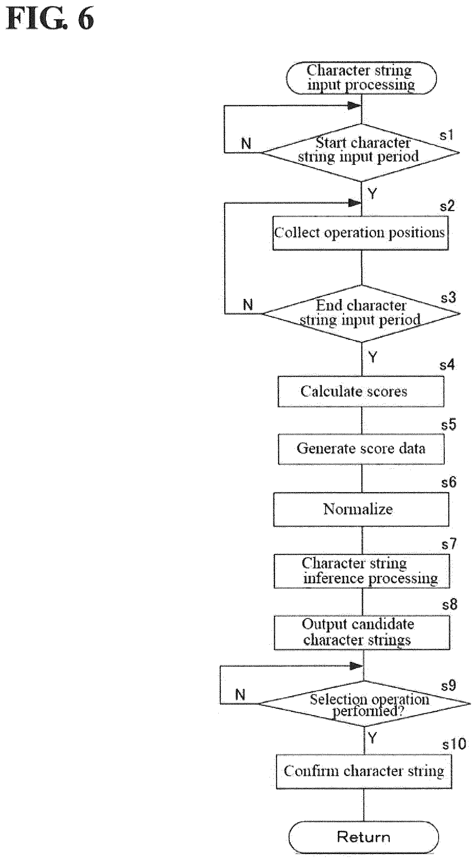

Next, character string input processing in this character string input apparatus will be described. FIG. 6 is a flowchart showing character string input processing in a character string input apparatus. The character string input apparatus 1 displays a keypad image (a keypad image that is selected at this point) including a plurality of character keys, on the screen of the display device 10. The character string input apparatus 1 repeatedly performs determination as to whether or not it is a start timing of a character string input period (step s1). As described above, the operation position detection unit 4 detects pressed positions on the screen of the display device 10 in a predetermined sampling period, and inputs the detected pressed positions to the control unit 2. If no pressed position on the screen of the display device 10 was input from the operation position detection unit 4 last time (no pressed position on the screen of the display device 10 was detected by the operation position detection unit 4 last time), and pressed positions on the screen of the display device 10 were input this time (pressed positions on the screen of the display device 10 were detected by the operation position detection unit 4 this time), the score calculation function unit 21 determines that it is a start timing of the character string input period.

This start timing of the character string input period is a timing at which the operator starts to press the screen of the display device 10 and slide his or her finger, a pen or the like on the screen of the display device 10 in order to input a character string.

If it is determined in step s1 that it is a start timing of a character string input period, the score calculation function unit 21 collects pressed positions on the screen of the display device 10 that have been input from the operation position detection unit 4 until an end timing of the current character string input period is reached (steps s2 and s3). In step s2, the score calculation function unit 21 causes a memory to store the pressed positions on the screen of the display device 10 that have been input from the operation position detection unit 4, in time series. In addition, in step s3, if pressed positions on the screen of the display device 10 were input from the operation position detection unit 4 last time (pressed positions on the screen of the display device 10 were detected by the operation position detection unit 4 last time), and no pressed position on the screen of the display device 10 was input this time (no pressed position on the screen of the display device 10 was detected by the operation position detection unit 4 this time), the score calculation function unit 21 determines that a timing at which the pressed positions on the screen of the display device 10 were detected last time to be the end timing of the character string input period.

This end timing of the character string input period is a timing immediately before the operator lifts his or her finger, a pen or the like from the screen of the display device 10 after ending the sliding operation on the screen of the display device 10.

In step s2, during the character string input period, the pressed positions on the screen of the display device 10 detected by the operation position detection unit 4 at sampling period intervals are collected.

The control unit 2 calculates the scores do for the character keys (step s4), when it is determined in step s3 that it is the end timing of the character string input period. In step s4, the score calculation function unit 21 calculates the scores $d_0$ for the character keys for each of the pressed positions on the screen of the display device 10 collected during the current character string input period. A configuration may be adopted in which this processing of step s4 is executed if the pressed positions on the screen of the display device 10 have been input from the operation position detection unit 4, without waiting for the end timing of the character string input period. In other words, a configuration may be adopted in which the processing of step s2 and the processing of step s4 are performed in parallel.

The score data generation function unit 22 generates score data in which the scores $d_0$ of the character keys calculated by the score calculation function unit 21 for each of the pressed positions on the screen of the display device 10 are registered (see FIG. 5) (step s5). This score data is matrix data consisting of n rows and m columns as described above, and m changes according to the length of the character string input period. The length of the character string input period changes according the number of characters of the character string that is to be input and the speed at which the operator performs the sliding operation on character keys included in the keypad image displayed on the screen of the display device 10.

The score data generation function unit 22 performs normalization for converting the score data generated in step s5, which is matrix data consisting of n rows and m columns, into matrix data consisting of n rows and M columns (s6). In s6, the score data generated in step s5 is converted into normalized score data. Normalization for converting matrix data consisting of n rows and m columns into matrix data consisting of n rows and M columns is performed by linear interpolation or the like as described above.

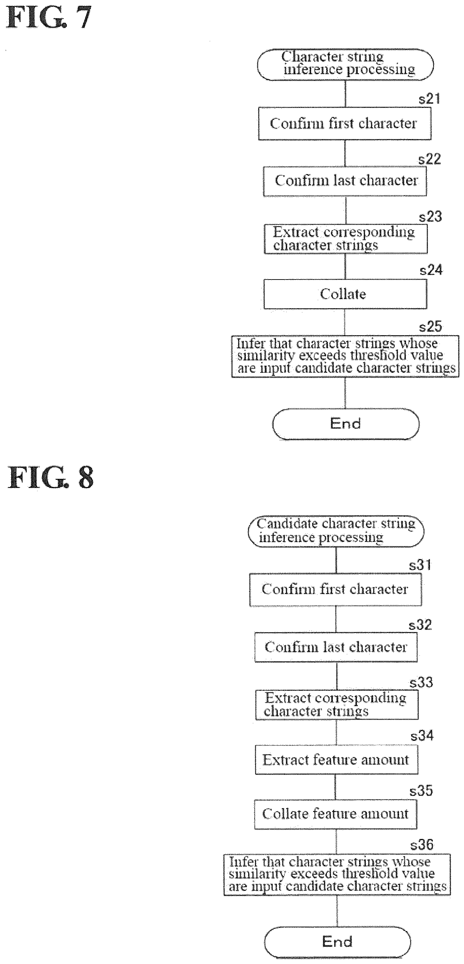

The input character string inference function unit 23 performs character string inference processing for inferring the character string that has been input this time, using the normalized score data (s7). FIG. 7 is a flowchart showing this character string inference processing of s7.

The input character string inference function unit 23 confirms the first character and the last character of the character string that has been input this time (steps s21 and s22). Usually, when starting a sliding operation on the screen of the display device 10 in order to input a character string, the operator presses the character key corresponding to the first character of the character string to be input with his or her finger, a pen or the like. Accordingly, the operator will be pressing the character key corresponding to the first character of the character string to be input with his or her finger, a pen or the like at a start timing of a character string input period. In addition, when ending a sliding operation on the screen of the display device 10 in order to input a character string, the operator lifts his or her finger, a pen or the like that is pressing the character key corresponding to the last character of the character string to be input from the screen of the display device 10. Accordingly, the operator will be pressing the character key corresponding to the last character of the character string to be input with his or her finger, a pen or the like immediately before the end timing of the character string input period. In step s21, at the start timing of this character string input period, the character of the character key whose score $d_0$ is the largest is confirmed to be the first character of the character string that was input this time. In addition, in step s22, at the end timing of this character string input period, the character for the character key whose score $d_0$ is the largest is confirmed to be the last character of the character string that was input this time.

Note that the order of the processing of step s21 and the processing of step s22 may be reversed.

The input character string inference function unit 23 extracts character strings whose first character is the character confirmed in step s21, and whose last character is the character confirmed in step s22 (step s23) out of the character strings stored in the character string data storage 6. The input character string inference function unit 23 collates, for each of the character strings extracted in step s23, the reference data of the character string with the score data normalized in s6 (step s24). The input character string inference function unit 23 infers that character strings whose similarity exceeds a predetermined threshold value are input candidate character strings, in the collation in step s24 (step s25). In step s25, one or more input candidate character strings may be inferred, or no input candidate character string may be inferred.

Note that the processing of steps s21 to s23 is for suppressing the processing load of the processing of step s24, and does not particularly need to be provided if the control unit 2 has high processing capability. In addition, a configuration may be adopted in which one of steps s21 and s22 is provided, and the other is not provided.

Returning to FIG. 6, the candidate character string output function unit 24 performs processing for outputting the input candidate character strings inferred in s7 (s8). The candidate character string output function unit 24 instructs the display unit 3 to display the input candidate character strings inferred in s7 on the screen of the display device 10. The display unit 3 displays the input candidate character strings on the screen of the display device 10 in accordance with this instruction.

Note that if, in s7, the input character string inference function unit 23 does not infer any input candidate character string, in s8, the candidate character string output function unit 24 instructs the display unit 3 to display, on the screen of the display device 10, a message that prompts redoing of the character string input operation.

If a selection operation of selecting one of the candidate character strings that have been output in s8 is performed (s9), the control unit 2 confirms the selected candidate character string to be the character string that has been input this time (step s10), and the procedure returns to step s1.

In this manner, this character string input apparatus 1 infers a character string that has been input by the operator performing a sliding operation on the keypad image displayed on the screen of the display device 10, by applying an image matching technique, not by detecting change in the moving direction and the moving speed on the locus of a line along which the operator performed a sliding operation. Therefore, this character string input apparatus 1 can infer a character string that has been input by an operator, with respect to an input operation in which the operator slides his or her finger, a pen or the like on the screen of the display device, with relatively simple processing.

In addition, in the above-described example, the character string data storage 6 stores, as reference data, matrix data consisting of n rows and M columns for each character string, but a configuration may be adopted in which the feature amount of this matrix data consisting of n rows and M columns is stored. The feature amount can be obtained by regarding the matrix data consisting of n rows and M columns as image data, and using a known technique for extracting the feature amount of an image.

In this case, it is sufficient that the processing shown in FIG. 8 is performed in place of the character string inference processing of s7. Specifically, the input character string inference function unit 23 confirms the first character and the last character of the character string that has been input this time (steps s31 and s32). The input character string inference function unit 23 then extracts character strings whose first character is the character confirmed in step s31 and whose last character is the character confirmed in step s32 out of the character strings stored in the character string data storage 6 (step s33). This processing of steps s31 to s33 is the same as the above-described processing of steps s21 to s23.

The input character string inference function unit 23 regards the score data normalized in s6 as image data, and extracts the feature amount (step s34). The input character string inference function unit 23 collates the feature amount of each of the character strings extracted in step s33 with the feature amount extracted in step s34 (step s35). The input character string inference function unit 23 infers in the collation in step s35 that character strings whose similarity exceeds a predetermined threshold value are input candidate character strings (step s36).

With such a configuration, it is possible to suppress the storage capacity of the character string data storage 6.

In addition, the character string input apparatus 1 may be configured such that the locus of a line along which the operator performed a sliding operation on the screen of the display device 10 in order to input a character string is displayed on the display device 10. With such a configuration, it is possible to allow the operator to check for operation errors and the like regarding character string input. The display of the locus of a line along which the operator performed a sliding operation on the screen of the display device 10 in order to input a character string can be performed by displaying operation positions collected in step s2, on the screen of the display device 10. When selection of a candidate character string has been accepted in s9, a certain amount of time has elapsed from the end timing of the character string input period, or the like, the locus of a line along which the operator performed the sliding operation on the screen of the display device 10 in order to input a character string may be deleted from the display device 10.

In addition, a configuration may be adopted in which the input character string inference function unit 23 is constituted by artificial intelligence (AI) that learns sliding operations on the screen of the display device 10 performed by the operator in order to input character strings, thereby achieving an improvement in the inference accuracy of the character string that has been input.

Moreover, for example, the score calculation function unit 21 may determine that a timing at which a predetermined amount of time has elapsed from the start timing of the character string input period as the end timing of the character string input period, or may determine the end timing of the character string input period under other conditions. Similarly, the score calculation function unit 21 may determine whether it is the start timing of the character string input period under a condition other than the above condition. Furthermore, a configuration may be adopted in which a plurality of conditions for determining the start timing of the character string input period are set, and a timing when one of the conditions is satisfied is determined as the start timing of the character string input period. Similarly, a configuration may be adopted in which a plurality of conditions for determining the end timing of the character string input period are set, and a timing when one of the conditions is satisfied is determined as the end timing of character string input period.

**Claims**

1. A character string input apparatus (1) comprising:

   a display unit (3) that is adapted to display a keypad image in which a plurality of character keys are arranged, on a screen of a display device (10);
   an operation position detection unit (4) that is adapted to detect pressed positions on the screen of the display device (10);
   a score calculation unit (21) that is adapted to calculate, for each of the character keys of the keypad image, scores of the pressed positions on the screen of the display device (10);

a score data generation unit (22) that is adapted to generate, for each of the pressed positions on the screen of the display device (10) detected by the operation position detection unit (4) during a character string input period, score data in which the scores for the character keys calculated by the score calculation unit (21) are registered; and
an input character string inference unit (23) that is adapted to infer a character string that was input, using the score data generated by the score data generation unit (22), **characterized by**
a character string database (6) that is adapted to store, for each character string, feature information in which reference data being matrix data, consisting of n rows and M columns or consisting of n columns and M rows where n is the number of character keys arranged in said keypad image and M is a predetermined value, is associated with the character string,
wherein the score data generation unit (22) is adapted to generate score data which is matrix data consisting of n rows and m columns or consisting of n columns and m rows, the m rows or m columns corresponding to timings of said character string input period, at which the pressed positions on the screen of the display device (10) are detected by the operation position detection unit (4), and the n columns or n rows corresponding to said number of the character keys of the keypad image such that the character keys are associated with timings at which the pressed positions on the screen of the display device (10) are detected by the operation position detection unit (4), element values of the matrix data serving as the scores calculated by the score calculation unit (21),
wherein the score data generation unit (22) is adapted to perform normalization for converting the matrix data consisting of n rows and m columns or consisting of n columns and m rows generated as score data into matrix data being normalized score data and consisting of n rows and M columns or consisting of M rows and n columns, that is independent of the length of the character string input period,
wherein the input character string inference unit (23) is adapted to infer that character strings corresponding to reference data whose similarity with normalized score data exceeds a predetermined threshold value are candidates for a character string that has been input.

2. The character string input apparatus (1) according to claim 1,
wherein the operation position detection unit (4) is adapted to repeatedly detect the pressed positions on the screen of the display device (10) in a predetermined sampling period, during the character string input period.

3. The character string input apparatus (1) according to claim 1 or 2,
wherein the score calculation unit (21) is adapted to calculate, as a score, a value indicating a closeness between a display position of a character key on the screen of the display device (10) and a pressed position on the screen of the display device (10) detected by the operation position detection unit (4).

4. The character string input apparatus (1) according to any one of claims 1 to 3,
wherein the input character string inference unit (23) is adapted to confirm that a character of a character key whose score calculated by the score calculation unit (21) is largest is a first character of a character string to be inferred, with respect to a pressed position on the screen of the display device (10) first detected by the operation position detection unit (4), during the character string input period.

5. The character string input apparatus (1) according to any one of claims 1 to 4,
wherein the input character string inference unit (23) is adapted to confirm that a character of a character key whose score calculated by the score calculation unit (21) is largest is a last character of a character string to be inferred, with respect to a pressed position on the screen of the display device (10) lastly detected by the operation position detection unit (4), during the character string input period.

6. The character string input apparatus (1) according to any one of claims 1 to 5, further comprising

the character string database (6) in which reference score data being said reference data is stored in association with each character string,
wherein the input character string inference unit (23) is adapted to collate the score data generated by the score data generation unit (22) with the reference score data stored in the character string database (6) for each character string, and to infer a character string that was input according to a similarity thereof.

7. The character string input apparatus (1) according to any one of claims 1 to 5, further comprising:

the character string database (6) in which a feature amount of reference score data being said reference data is stored in association with each character string,
wherein the input character string inference unit (23) is adapted to collate a feature amount of the score data generated by the score data generation unit (22) with the feature amount of the reference score data stored in the character string database (6) for each character string, and to infer a character string that was input according to a similarity thereof.

8. An input string inference method, the method comprising the following steps of

displaying a keypad image in which a plurality of character keys are arranged, on a screen of a display device (10);
detecting pressed positions on the screen of the display device (10);
calculating, for each of the character keys of the keypad image, scores of the pressed positions on the screen of the display device (10);
generating, for each of the pressed positions on the screen of the display device (10) detected during a character string input period, score data in which the scores for the character keys calculated are registered; and
inferring a character string that was input, using the score data generated, **characterized by** storing, for each character string, feature information in which reference data being matrix data, consisting of n rows and M columns or consisting of n columns and M rows where n is the number of character keys arranged in said keypad image and M is a predetermined value, is associated with the character string,
wherein score data is generated, which is matrix data consisting of n rows and m columns or consisting of n columns and m rows, the m rows or m columns corresponding to timings of said character string input period, at which the pressed positions on the screen of the display device (10) are detected, and the n columns or n rows corresponding to said number of the character keys of the keypad image such that the character keys are associated with timings at which the pressed positions on the screen of the display device (10) are detected, element values of the matrix data serving as the scores calculated,
wherein normalization is performed for converting the matrix data consisting of n rows and m columns or consisting of n columns and m rows generated as score data into matrix data being normalized score data and consisting of n rows and M columns or consisting of M rows and n columns, that is independent of the length of the character string input period,
wherein it is inferred that character strings corresponding to reference data whose similarity with normalized score data exceeds a predetermined threshold value are candidates for a character string that has been input.

9. An input string inference computer program that, when run on a computer, causes said computer to execute the method according to claim 8.

**Patentansprüche**

1. Zeichenketteneingabevorrichtung (1) mit:

eine Anzeigeeinheit (3), die eingerichtet ist, ein Tastaturbild, in dem eine Vielzahl von Zeichentasten angeordnet sind, auf einem Bildschirm einer Anzeigevorrichtung (10) anzuzeigen;
eine Betätigungspositionserfassungseinheit (4), die eingerichtet ist, gedrückte Positionen auf dem Bildschirm der Anzeigevorrichtung (10) zu erfassen;
eine Punktzahlberechnungseinheit (21), die eingerichtet ist, für jede der Zeichentasten des Tastaturbildes die Punktzahlen der gedrückten Positionen auf dem Bildschirm der Anzeigevorrichtung (10) zu berechnen;
eine Punktzahldatenerzeugungseinheit (22), die eingerichtet ist, für jede der gedrückten Positionen auf dem Bildschirm der Anzeigevorrichtung (10), die von der Betätigungspositionserfassungseinheit (4) während einer Zeichenketteneingabeperiode erfasst werden, Punktzahldaten zu erzeugen, in denen die von der Punktzahlberechnungseinheit (21) berechneten Werte für die Zeichentasten gespeichert sind; und
eine Eingabezeichenketteninferenzeinheit (23), die eingerichtet ist, eine eingegebene Zeichenkette unter Verwendung der von der Punktzahldatenerzeugungseinheit (22) erzeugten Punktzahldaten abzuleiten, **gekennzeichnet durch** eine Zeichenkettendatenbank (6), die eingerichtet ist, für jede Zeichenkette Merkmalsinformationen zu speichern, in denen Referenzdaten, die Matrixdaten sind, die aus n Zeilen und M Spalten oder aus n Spalten und M Zeilen bestehen, wobei n die Anzahl von Zeichentasten ist, die in dem Tastaturbild angeordnet sind, und M ein vorbestimmter Wert ist, mit der Zeichenkette verknüpft sind,
wobei die Punktzahldatenerzeugungseinheit (22) eingerichtet ist, Punktzahldaten zu erzeugen, die Matrixdaten sind, die aus n Zeilen und m Spalten oder aus n Spalten und m Zeilen bestehen, wobei die m Zeilen oder m Spalten Zeitpunkten der Zeichenketteneingabeperiode entsprechen, zu denen die gedrückten Positionen auf dem Bildschirm der Anzeigevorrichtung (10) durch die Betätigungspositionserfassungseinheit (4) erfasst werden, und die n Spalten oder n Zeilen der Anzahl der Zeichentasten des Tastaturbildes entsprechen, so dass die Zeichentasten mit Zeitpunkten verknüpft sind, zu denen die gedrückten Positionen auf dem Bildschirm der Anzeigevorrichtung (10) durch die Betätigungspositionserfassungseinheit (4) erfasst werden, wobei Elementwerte der Matrixdaten als die von der Punktzahlberechnungseinheit (21) berechneten Punktzahlen dienen, wobei die Punktzahldatenerzeugungseinheit (22) eingerichet ist, eine Normalisierung durchzuführen, um die Matrixdaten, die aus n Zeilen und m Spalten bestehen oder aus n Spalten und m Zeilen bestehen, die als Punktzahldaten erzeugt wurden, in Matrixdaten umzuwandeln, die normalisierte Punktzahldaten sind und aus n Zeilen und M Spalten bestehen oder aus M Zeilen und n Spalten bestehen, was unabhängig von der Länge der Zeichenketteneingabeperiode ist, wobei die Eingabezeichenketteninferenzeinheit (23) eingerichtet ist, um zu folgern, dass Zeichenketten, die Referenzdaten entsprechen, deren Ähnlichkeit mit normalisierten Punktzahldaten einen vorbestimmten Schwellenwert überschreitet, Kandidaten für eine Zeichenkette sind, die eingegeben wurde.

2. Zeichenketteneingabevorrichtung (1) nach Anspruch 1,
wobei die Betätigungspositionserfassungseinheit (4) eingerichtet ist, die gedrückten Positionen auf dem Bildschirm der Anzeigevorrichtung (10) in einer vorbestimmten Abtastperiode während der Zeichenketteneingabeperiode wiederholt zu erfassen.

3. Zeichenketteneingabevorrichtung (1) nach Anspruch 1 oder 2,
wobei die Punktzahlberechnungseinheit (21) eingerichtet ist, um als eine Punktzahl einen Wert zu berechnen, der eine Nähe zwischen einer Anzeigeposition einer Zeichentaste auf dem Bildschirm der Anzeigevorrichtung (10) und einer gedrückten Position auf dem Bildschirm der Anzeigevorrichtung (10) anzeigt, die von der Betätigungspositionserfassungseinheit (4) erfasst wird.

4. Zeichenketteneingabevorrichtung (1) nach einem der Ansprüche 1 bis 3,
wobei die Eingabezeichenketteninferenzeinheit (23) eingerichtet ist, um zu bestätigen, dass ein Zeichen einer Zeichentaste, deren von der Punktzahlberechnungseinheit (21) berechnete Punktzahl am größten ist, ein erstes Zeichen einer zu schlussfolgernden Zeichenkette ist, in Bezug auf eine gedrückte Position auf dem Bildschirm der Anzeigevorrichtung (10), die zuerst von der Betätigungspositionserfassungseinheit (4) während der Zeichenketteneingabeperiode erfasst wurde.

5. Zeichenketteneingabevorrichtung (1) nach einem der Ansprüche 1 bis 4,
wobei die Eingabezeichenketteninferenzeinheit (23) eingerichtet ist, um zu bestätigen, dass ein Zeichen einer Zeichentaste, deren von der Punktzahlberechnungseinheit (21) berechnete Punktzahl am größten ist, ein letztes Zeichen einer abzuleitenden Zeichenkette ist, in Bezug auf eine gedrückte Position auf dem Bildschirm der Anzeigevorrichtung (10), die zuletzt von der Betätigungspositionserfassungseinheit (4) während der Zeichenketteneingabeperiode erfasst wurde.

6. Zeichenketteneingabevorrichtung (1) nach einem der Ansprüche 1 bis 5, ferner umfassend

die Zeichenkettendatenbank (6), in der die Referenzpunktzahldaten, die die Referenzdaten sind, in Verknüpfung mit jeder Zeichenkette gespeichert sind,
wobei die Eingabezeichenketteninferenzeinheit (23) eingerichtet ist, um die von der Punktzahldatenerzeugungseinheit (22) erzeugten Punktzahldaten mit den in der Zeichenkettendatenbank (6) gespeicherten Referenzpunktzahldaten für jede Zeichenkette abzugleichen und auf eine Zeichenkette, die eingegeben wurde, gemäß einer Ähnlichkeit davon zu schließen.

7. Zeichenketteneingabevorrichtung (1) nach einem der Ansprüche 1 bis 5, ferner umfassend:

die Zeichenkettendatenbank (6), in der eine Merkmalsmenge von Referenzpunktzahldaten, die die Referenzdaten sind, in Verknüpfung mit jeder Zeichenkette gespeichert sind,
wobei die Eingabezeichenketteninferenzeinheit (23) eingerichtet ist, um eine Merkmalsmenge der von der Punktzahldatenerzeugungseinheit (22) erzeugten Punktzahldaten mit der Merkmalsmenge der in der Zeichenkettendatenbank (6) gespeicherten Referenzpunktzahldaten für jede Zeichenkette zu vergleichen und auf eine Zeichenkette, die eingegeben wurde, gemäß einer Ähnlichkeit davon zu schließen.

8. Verfahren zur Inferenz von Eingabezeichenketten, wobei das Verfahren die folgenden Schritte umfasst

Anzeigen eines Tastaturbildes, in dem eine Vielzahl von Zeichentasten angeordnet sind, auf einem Bildschirm einer Anzeigevorrichtung (10);
Erfassen von gedrückten Positionen auf dem Bildschirm des Anzeigegeräts (10);
Berechnen der Punktzahlen der gedrückten Positionen auf dem Bildschirm der Anzeigevorrichtung (10) für jede der Zeichentasten des Tastaturbildes;

Erzeugen, für jede der gedrückten Positionen auf dem Bildschirm der Anzeigevorrichtung (10), die während einer Zeichenketteneingabeperiode erfasst werden, von Punktzahldaten, in denen die berechneten Punktzahlen für die Zeichentasten gespeichert werden; und Herleiten einer eingegebenen Zeichenkette unter Verwendung der erzeugten Punktzahldaten, **gekennzeichnet durch**

Speichern, für jede Zeichenkette, von Merkmalsinformationen, in denen Referenzdaten, die Matrixdaten sind, bestehend aus n Zeilen und M Spalten oder bestehend aus n Spalten und M Zeilen, wobei n die Anzahl von Zeichentasten ist, die in dem Tastaturbild angeordnet sind, und M ein vorbestimmter Wert ist, mit der Zeichenkette verknüpft sind,

wobei Punktzahldaten erzeugt werden, die Matrixdaten sind, die aus n Zeilen und m Spalten oder aus n Spalten und m Zeilen bestehen, wobei die m Zeilen oder m Spalten Zeitpunkten der Zeichenketteneingabeperiode entsprechen, zu denen die gedrückten Positionen auf dem Bildschirm der Anzeigevorrichtung (10) erfasst werden, und die n Spalten oder n Zeilen der Anzahl der Zeichentasten des Tastaturbildes entsprechen, so dass die Zeichentasten mit Zeitpunkten verknüpft werden, zu denen die gedrückten Positionen auf dem Bildschirm der Anzeigevorrichtung (10) erfasst werden, wobei Elementwerte der Matrixdaten als die berechneten Punktzahlen dienen,

wobei eine Normalisierung durchgeführt wird, um die Matrixdaten, die aus n Zeilen und m Spalten bestehen oder aus n Spalten und m Zeilen bestehen, die als Punktzahldaten erzeugt wurden, in Matrixdaten umzuwandeln, die normalisierte Punktzahldaten sind und aus n Zeilen und M Spalten bestehen oder aus M Zeilen und n Spalten bestehen, was unabhängig von der Länge der Zeichenketteneingabeperiode ist,

wobei gefolgert wird, dass Zeichenketten, die Referenzdaten entsprechen, deren Ähnlichkeit mit normalisierten Punktzahldaten einen vorbestimmten Schwellenwert überschreitet, Kandidaten für eine eingegebene Zeichenkette sind.

9. Ein Eingabezeichenketteninferenzcomputerprogramm, das, wenn es auf einem Computer ausgeführt wird, den Computer veranlasst, das Verfahren nach Anspruch 8 auszuführen.

**Revendications**

1. Appareil d'entrée de chaînes de caractères (1) comprenant :

une unité d'affichage (3) qui est adaptée pour afficher une image de clavier à l'intérieur de laquelle les touches d'une pluralité de touches de caractère sont agencées, sur un écran d'un dispositif d'affichage (10) ;

une unité de détection de positions d'actionnement (4) qui est adaptée pour détecter des positions pressées sur l'écran du dispositif d'affichage (10) ;

une unité de calcul de scores (21) qui est adaptée pour calculer, pour chacune des touches de caractère de l'image de clavier, des scores des positions pressées sur l'écran du dispositif d'affichage (10) ;

une unité de génération de données de score (22) qui est adaptée pour générer, pour chacune des positions pressées sur l'écran du dispositif d'affichage (10) qui sont détectées par l'unité de détection de positions d'actionnement (4) pendant une période d'entrée de chaîne de caractères, des données de score à l'intérieur desquelles les scores pour les touches de caractère qui sont calculés par l'unité de calcul de scores (21) sont enregistrés ; et

une unité de déduction de chaîne de caractères d'entrée (23) qui est adaptée pour déduire une chaîne de caractères qui a été entrée, en utilisant les données de score qui sont générées par l'unité de génération de données de score (22) ;

**caractérisé par** :

une base de données de chaînes de caractères (6) qui est adaptée pour stocker, pour chaque chaîne de caractères, une information de caractéristique selon laquelle des données de référence, qui sont des données de matrice qui sont constituées par n lignes et par M colonnes ou qui sont constituées par n colonne et par M lignes où n est le nombre de touches de caractère qui sont agencées dans ladite image de clavier et M est une valeur prédéterminée, sont associées à la chaîne de caractères ;

dans lequel l'unité de génération de données de score (22) est adaptée pour générer des données de score qui sont des données de matrice qui sont constituées par n lignes et par m colonnes ou qui sont constituées par n colonnes et par m lignes, les m lignes ou les m colonnes correspondant à des chronométrages de ladite période d'entrée de chaîne de caractères auxquelles les positions pressées sur l'écran du dispositif d'affichage (10) sont détectées par l'unité de détection de positions d'actionnement (4), et les n colonnes ou les n lignes correspondant audit nombre des touches de caractère de l'image de clavier, de telle sorte que les touches de caractère soient associées à des chronométrages auxquels les positions pressées sur l'écran du dispositif d'affichage (10) sont détectées par l'unité de détection de positions d'actionnement (4), des valeurs élémentaires des données de matrice jouant le rôle des scores qui sont calculés par l'unité de calcul de scores (21) ; dans lequel l'unité de génération de données de score (22) est adaptée pour réaliser une normalisation pour convertir les données de matrice, qui sont constituées par n lignes et par m colonnes ou qui sont constituées par n colonnes et par m lignes et qui sont générées en tant que données de score, en données de matrice qui sont des données de score normalisées et qui sont constituées par n lignes et par M colonnes ou qui sont constituées par M lignes et par n colonnes, lesquelles sont indépendantes de la longueur de la période d'entrée de chaîne de caractères ; et dans lequel l'unité de déduction de chaîne de caractères d'entrée (23) est adaptée pour déduire que des chaînes de caractères correspondant à des données de référence dont la similarité avec des données de score normalisées excède une valeur de seuil prédéterminée sont des candidats pour une chaîne de caractères qui a été entrée.

2. Appareil d'entrée de chaînes de caractères (1) selon la revendication 1, dans lequel l'unité de détection de positions d'actionnement (4) est adaptée pour détecter de façon répétée les positions pressées sur l'écran du dispositif d'affichage (10) selon une période d'échantillonnage prédéterminée, pendant la période d'entrée de chaîne de caractères.

3. Appareil d'entrée de chaînes de caractères (1) selon la revendication 1 ou 2, dans lequel l'unité de calcul de scores (21) est adaptée pour calculer, en tant que score, une valeur qui représente une proximité entre une position d'affichage d'une touche de caractère sur l'écran du dispositif d'affichage (10) et une position pressée sur l'écran du dispositif d'affichage (10) qui est détectée par l'unité de détection de positions d'actionnement (4) .

4. Appareil d'entrée de chaînes de caractères (1) selon l'une quelconque des revendications 1 à 3, dans lequel l'unité de déduction de chaîne de caractères d'entrée (23) est adaptée pour confirmer qu'un caractère d'une touche de caractère, dont le score qui est calculé par l'unité de calcul de scores (21) est le plus grand, est un premier caractère d'une chaîne de caractères qui doit être déduite, par rapport à une position pressée sur l'écran du dispositif d'affichage (10) qui est détectée en premier par l'unité de détection de positions d'actionnement (4), pendant la période d'entrée de la chaîne de caractères.

5. Appareil d'entrée de chaînes de caractères (1) selon l'une quelconque des revendications 1 à 4, dans lequel l'unité de déduction de chaîne de caractères d'entrée (23) est adaptée pour confirmer qu'un caractère d'une touche de caractère, dont le score qui est calculé par l'unité de calcul de scores (21) est le plus grand, est un dernier caractère d'une chaîne de caractères qui doit être déduite, par rapport à une position pressée sur l'écran du dispositif d'affichage (10) qui est détectée en dernier par l'unité de détection de positions d'actionnement (4), pendant la période d'entrée de la chaîne de caractères.

6. Appareil d'entrée de chaînes de caractères (1) selon l'une quelconque des revendications 1 à 5, comprenant en outre :

   la base de données de chaînes de caractères (6) à l'intérieur de laquelle des données de score de référence qui sont lesdites données de référence sont stockées en association avec chaque chaîne de caractères ; dans lequel l'unité de déduction de chaîne de caractères d'entrée (23) est adaptée pour collationner les données de score qui sont générées par l'unité de génération de données de score (22) avec les données de score de référence qui sont stockées à l'intérieur de la base de données de chaînes de caractères (6) pour chaque chaîne de caractères, et pour déduire une chaîne de caractères qui a été entrée en fonction de sa similarité.

7. Appareil d'entrée de chaînes de caractères (1) selon l'une quelconque des revendications 1 à 5, comprenant en outre :

   la base de données de chaînes de caractères (6) à l'intérieur de laquelle une valeur de caractéristique de données de score de référence qui sont lesdites données de référence est stockée en association avec chaque chaîne de caractères ; dans lequel l'unité de déduction de chaîne de caractères d'entrée (23) est adaptée pour collationner une valeur de caractéristique des données de score qui sont générées par l'unité de génération de données de score (22) avec la valeur de caractéristique des données de score de référence qui sont stockées à l'intérieur de la base de données de chaînes de caractères (6) pour chaque chaîne de caractères, et pour déduire une chaîne de caractère qui a été entrée en fonction de sa similarité.

8. Procédé de déduction de chaîne de caractères, le procédé comprenant les étapes qui suivent et qui sont constituées par :

l'affichage d'une image de clavier à l'intérieur de laquelle les touches d'une pluralité de touches de caractère sont agencées, sur un écran d'un dispositif d'affichage (10) ;

la détection de positions pressées sur l'écran du dispositif d'affichage (10) ;

le calcul, pour chacune des touches de caractère de l'image de clavier, de scores des positions pressées sur l'écran du dispositif d'affichage (10) ;

la génération, pour chacune des positions pressées sur l'écran du dispositif d'affichage (10) qui sont détectées pendant une période d'entrée de chaîne de caractères, de données de score à l'intérieur desquelles les scores pour les touches de caractère qui sont calculés sont enregistrés ; et

la déduction d'une chaîne de caractères qui a été entrée, en utilisant les données de score générées ;

**caractérisé par** :

le stockage, pour chaque chaîne de caractères, d'une information de caractéristique selon laquelle des données de référence, qui sont des données de matrice qui sont constituées par n lignes et par M colonnes ou qui sont constituées par n colonnes et par M lignes où n est le nombre de touches de caractère qui sont agencées dans ladite image de clavier et M est une valeur prédéterminée, sont associées à la chaîne de caractères ;

dans lequel des données de score sont générées, lesquelles sont des données de matrice qui sont constituées par n lignes et par m colonnes ou qui sont constituées par n colonnes et par m lignes, les m lignes ou les m colonnes correspondant à des chronométrages de ladite période d'entrée de chaîne de caractères auxquelles les positions pressées sur l'écran du dispositif d'affichage (10) sont détectées et les n colonnes ou les n lignes correspondant audit nombre des touches de caractère de l'image de clavier, de telle sorte que les touches de caractère soient associées à des chronométrages auxquels les positions pressées sur l'écran du dispositif d'affichage (10) sont détectées, des valeurs élémentaires des données de matrice jouant le rôle des scores qui sont calculés ;

dans lequel une normalisation est réalisée pour convertir les données de matrice, qui sont constituées par n lignes et par m colonnes ou qui sont constituées par n colonnes et par m lignes et qui sont générées en tant que données de score, selon des données de matrice qui sont des données de score normalisées et qui sont constituées par n lignes et par M colonnes ou qui sont constituées par M lignes et par n colonnes, lesquelles sont indépendantes de la longueur de la période d'entrée de chaîne de caractères ; et

dans lequel il est déduit que des chaînes de caractères correspondant à des données de référence dont la similarité avec des données de score normalisées excède une valeur de seuil prédéterminée sont des candidats pour une chaîne de caractères qui a été entrée.

9. Progiciel de déduction de chaîne de caractères qui, lorsqu'il est déroulé sur un ordinateur, a pour effet que ledit ordinateur exécute le procédé selon la revendication 8.

# FIG. 1

1

5
Keypad image storage

6
Character string data storage

2
Control unit

23
Input character string inference function unit

22
Score data generation function unit

24
Candidate character string output function unit

21
Score calculation function unit

3
Display unit

4
Operation position detection unit

10,11

| Q | W | E | R | T | Y | U | I | O | P |
| A | S | D | F | G | H | J | K | L |
| Z | X | C | V | B | N | M |

FIG. 2

# FIG. 3A

# FIG. 3B

# FIG. 3C

## FIG. 4A

## FIG. 4B

# FIG. 5

Character string input period

| | t1 | t2 | t3 | ⋯⋯⋯⋯⋯⋯⋯⋯⋯⋯⋯⋯ | tm−2 | tm−1 | tm |
|---|---|---|---|---|---|---|---|
| A | 3.6, | 2.6, | 1.3, | ⋯⋯⋯⋯⋯⋯⋯⋯⋯⋯ | 0, | 0, | 0 |
| B | 0, | 0, | 0, | ⋯⋯⋯⋯⋯⋯⋯⋯⋯⋯ | 0, | 0, | 0 |
| C | 0, | 0, | 0, | ⋯⋯⋯⋯⋯⋯⋯⋯⋯⋯ | 0, | 0, | 0 |
| D | 0, | 0, | 0, | ⋯⋯⋯⋯⋯⋯⋯⋯⋯⋯ | 0, | 0, | 0 |
| E | 0, | 0, | 0. | ⋯⋯⋯⋯⋯⋯⋯⋯⋯⋯ | 0, | 0, | 0 |
| F | 0, | 0, | 0, | ⋯⋯⋯⋯⋯⋯⋯⋯⋯⋯ | 0, | 0, | 0 |
| G | 0, | 0, | 0, | ⋯⋯⋯⋯⋯⋯⋯⋯⋯⋯ | 0, | 0, | 0 |
| H | 0, | 0, | 0, | ⋯⋯⋯⋯⋯⋯⋯⋯⋯⋯ | 0, | 0, | 0 |
| I | 0, | 0, | 0, | ⋯⋯⋯⋯⋯⋯⋯⋯⋯⋯ | 0, | 0, | 0 |
| J | 0, | 0, | 0, | ⋯⋯⋯⋯⋯⋯⋯⋯⋯⋯ | 0, | 0, | 0 |
| K | 0, | 0, | 0, | ⋯⋯⋯⋯⋯⋯⋯⋯⋯⋯ | 0, | 0, | 0 |
| L | 0, | 0, | 0, | ⋯⋯⋯⋯⋯⋯⋯⋯⋯⋯ | 0, | 0, | 0 |
| M | 0, | 0, | 0, | ⋯⋯⋯⋯⋯⋯⋯⋯⋯⋯ | 0.5, | 0 | 0 |
| N | 0, | 0, | 0, | ⋯⋯⋯⋯⋯⋯⋯⋯⋯⋯ | 1.2, | 2.4, | 3.2 |
| O | 0, | 0, | 0, | ⋯⋯⋯⋯⋯⋯⋯⋯⋯⋯ | 0, | 0, | 0 |
| P | 0, | 0, | 0, | ⋯⋯⋯⋯⋯⋯⋯⋯⋯⋯ | 0, | 0, | 0 |
| Q | 0, | 0, | 0, | ⋯⋯⋯⋯⋯⋯⋯⋯⋯⋯ | 0, | 0, | 0 |
| R | 0, | 0, | 0, | ⋯⋯⋯⋯⋯⋯⋯⋯⋯⋯ | 0, | 0, | 0 |
| S | 0, | 0, | 0, | ⋯⋯⋯⋯⋯⋯⋯⋯⋯⋯ | 0, | 0, | 0 |
| T | 0, | 0, | 0, | ⋯⋯⋯⋯⋯⋯⋯⋯⋯⋯ | 0, | 0, | 0 |
| U | 0, | 0, | 0, | ⋯⋯⋯⋯⋯⋯⋯⋯⋯⋯ | 0, | 0, | 0 |
| V | 0, | 0, | 0, | ⋯⋯⋯⋯⋯⋯⋯⋯⋯⋯ | 0, | 0, | 0 |
| W | 0, | 0, | 0, | ⋯⋯⋯⋯⋯⋯⋯⋯⋯⋯ | 0, | 0, | 0 |
| X | 0, | 0, | 0, | ⋯⋯⋯⋯⋯⋯⋯⋯⋯⋯ | 0, | 0, | 0 |
| Y | 0, | 0, | 0, | ⋯⋯⋯⋯⋯⋯⋯⋯⋯⋯ | 0, | 0, | 0 |
| Z | 0, | 0, | 0.1, | ⋯⋯⋯⋯⋯⋯⋯⋯⋯⋯ | 0, | 0, | 0 |

Character key

# FIG. 6

```
        ( Character string )
        ( input processing )
                │
         ┌──────┼──────────────
         │      ▼
      N  ◇  Start character  ◇  s1
    ◄────   string input period
                │
                │ Y
                ▼                    s2
    ┌───────────────────────────┐
    │  Collect operation positions │
    └───────────────────────────┘
                │
                ▼                    s3
      N   ◇  End character  ◇
    ◄─────  string input period
                │
                │ Y
                ▼                    s4
    ┌───────────────────────────┐
    │     Calculate scores       │
    └───────────────────────────┘
                │
                ▼                    s5
    ┌───────────────────────────┐
    │   Generate score data      │
    └───────────────────────────┘
                │
                ▼                    s6
    ┌───────────────────────────┐
    │        Normalize           │
    └───────────────────────────┘
                │
                ▼                    s7
    ┌───────────────────────────┐
    │     Character string       │
    │   inference processing     │
    └───────────────────────────┘
                │
                ▼                    s8
    ┌───────────────────────────┐
    │    Output candidate        │
    │    character strings       │
    └───────────────────────────┘
                │
                ▼                    s9
      N   ◇  Selection operation  ◇
    ◄─────     performed?
                │
                │ Y
                ▼                    s10
    ┌───────────────────────────┐
    │  Confirm character string  │
    └───────────────────────────┘
                │
                ▼
          ( Return )
```

20

## FIG. 7

```
        ( Character string      )
        ( inference processing  )
                    |
                    | s21
        ┌───────────────────────┐
        │  Confirm first character │
        └───────────────────────┘
                    |
                    | s22
        ┌───────────────────────┐
        │  Confirm last character  │
        └───────────────────────┘
                    |
                    | s23
        ┌───────────────────────┐
        │  Extract corresponding   │
        │  character strings       │
        └───────────────────────┘
                    |
                    | s24
        ┌───────────────────────┐
        │       Collate          │
        └───────────────────────┘
                    |
                    | s25
        ┌───────────────────────────────┐
        │ Infer that character strings whose │
        │ similarity exceeds threshold value │
        │ are input candidate character strings │
        └───────────────────────────────┘
                    |
                ( End )
```

## FIG. 8

```
        ( Candidate character string )
        ( inference processing       )
                    |
                    | s31
        ┌───────────────────────┐
        │  Confirm first character │
        └───────────────────────┘
                    |
                    | s32
        ┌───────────────────────┐
        │  Confirm last character  │
        └───────────────────────┘
                    |
                    | s33
        ┌───────────────────────┐
        │  Extract corresponding   │
        │  character strings       │
        └───────────────────────┘
                    |
                    | s34
        ┌───────────────────────┐
        │  Extract feature amount  │
        └───────────────────────┘
                    |
                    | s35
        ┌───────────────────────┐
        │  Collate feature amount  │
        └───────────────────────┘
                    |
                    | s36
        ┌───────────────────────────────┐
        │ Infer that character strings whose │
        │ similarity exceeds threshold value │
        │ are input candidate character strings │
        └───────────────────────────────┘
                    |
                ( End )
```

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8667414 B2
- US 2014359515 A1
- US 2013290894 A
- US 2013249818 A1
- US 2007040813 A1